(19) Europäisches Patentamt
European Patent Office
Office européen des brevets

(11) **EP 1 592 164 B1**

(12) **EUROPÄISCHE PATENTSCHRIFT**

(45) Veröffentlichungstag und Bekanntmachung des Hinweises auf die Patenterteilung:
**16.06.2010 Patentblatt 2010/24**

(51) Int Cl.:
*H04L 7/02* *(2006.01)*    *H04L 27/38* *(2006.01)*
*H04L 27/26* *(2006.01)*

(21) Anmeldenummer: **05008853.3**

(22) Anmeldetag: **22.04.2005**

(54) **Verfahren und Schaltungsanordnung zum Bestimmen eines Taktsignal-Abtastzeitpunkts für Symbole eines Modulationsverfahrens**

Method and circuit arrangement for determining a sampling time by a clock signal for symbols of a modulation method

Procédé et circuit pour déterminer un point d'échantillonnage par un signal d'horloge pour des symboles d'un procédé de modulation

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **26.04.2004 DE 102004020300**

(43) Veröffentlichungstag der Anmeldung:
**02.11.2005 Patentblatt 2005/44**

(73) Patentinhaber: **Trident Microsystems (Far East) Ltd.**
**Grand Cayman (KY)**

(72) Erfinder:
• **Bock, Christian, Dr.**
**79108 Freiburg (DE)**

• **Witte, Franz-Otto, Dr.**
**79331 Tengen (DE)**
• **Noeske, Carsten, Dipl.-Ing.**
**79350 Sexau (DE)**

(74) Vertreter: **Epping - Hermann - Fischer Patentanwaltsgesellschaft mbH**
**Ridlerstrasse 55**
**80339 München (DE)**

(56) Entgegenhaltungen:
EP-A- 0 786 921      WO-A-98/12835
DE-A1- 10 344 756      DE-A1- 19 920 334
DE-C1- 19 540 250      US-A- 4 866 739
US-A- 6 154 510

**Beschreibung**

Die Erfindung bezieht sich auf ein Verfahren zum Bestimmen eines Abtastzeitpunkts eines Taktsignals für eine Schaltungsanordnung zum Bestimmen von Symbolen aus einem empfangenen, insbesondere komplex modulierten Signal, mit den oberbegrifflichen Merkmalen des Patentanspruchs 1 bzw. auf eine Schaltungsanordnung zum Durchführen eines solchen Verfahrens.

Aus der US 4,866,739 ist ein Verfahren zur Bestimmung des Timings bei QAM-Signalen bekannt, bei dem ausgehend von der Summe der Quadrate der Quadratur- und der Inphasekomponente zwei Fehlersignale optimiert werden. Es wird der Abstand zwischen einem Punkt mit minimaler Amplitude und einem Punkt mit maximaler Amplitude maximiert und der Abstand zwischen einem Punkt mit maximaler Steigung und einem Punkt mit minimaler Steigung minimiert.

Die Abtastfrequenz und der Abtastzeitpunkt eines Taktsignals sind beim Empfang von digitalen, mit einem Quadratursignalpaar gekoppelten Signalen für das schnelle Einrasten von entscheidungsrückgekoppelten Regelschleifen ein bedeutender Faktor. Derartige Regelschleifen finden sich beispielsweise bei der Einstellung von Abtastzeitpunkten, bei der Einstellung eines Entzerrers, der lineare Verzerrungen beim Empfang des Quadratursignalpaares beseitigt, oder bei der Trägerfrequenz- und Trägerphasenregelung.

Die derart empfangenen, insbesondere codierten Symbole, welche die eigentlichen Daten darstellen, stellen in codierter Form einen ein- oder mehrstelligen Digitalwert dar. Die Codierung erfolgt für die Übertragung über das Quadratursignalpaar, das einem Zeiger entspricht, der zu bestimmten Zeitpunkten diskrete Positionen im kartesischen Amplituden- und Phasenraum des Quadratursignalpaares einnimmt. Diese Zeitpunkte folgen in äquidistanten Abständen aufeinander und müssen durch den Abtasttakt möglichst genau getroffen werden. Übliche derartige Übertragungsverfahren sind QAM (Quadrature Amplitude Modulation) und PSK (Phase Shift Keying).

In einem üblichen Empfänger zum Empfang digitaler Signale mischt ein komplexer Multiplizierer oder Mischer, der von einem Lokaloszillator angesteuert wird, das empfangene, auf einen Träger modulierte QAM-Signal frequenz- und phasenrichtig in das Basisband der Schaltungsanordnung. Bei einer digitalen Verarbeitung kann dies vor oder nach einer A/D-Umsetzung (A/D: Analog/Digital) erfolgen. Das Signal wird entweder mit dem Symboltakt oder einem Vielfachen davon abgetastet und digitalisiert, oder der Digitalisierungstakt ist gegenüber dem erforderlichen Symboltakt freilaufend. In diesem Fall wird das Signal letztendlich über eine rein digitale Abtastratenwandlung auf den Symboltakt oder ein Vielfaches davon umgesetzt. Verstärkungsregelungen sorgen dafür, dass der jeweilige Aussteuerbereich ausgenutzt wird und dass die empfangenen Signale richtig auf die Symbolentscheiderstufe abgebildet werden. Ein adaptiver Entzerrer (Equalizer) vermindert die Intersymbolinterferenz, die in linearen Verzerrungen des Senders, der Übertragungsstrecke oder des Empfängers ihren Ursprung hat.

Bei hochwertigen Demodulatoren für QAM- oder PSK-Signale benötigen die Regelschaltungen für die Frequenz- und Phasenregelung des Lokaloszillators, für die Rückgewinnung des Symboltaktes und für den adaptiven Entzerrer sowohl die empfangenen Signale als auch diejenigen Elemente des vorgegebenen Symbolalphabets, die von einer Entscheiderstufe als wahrscheinlichste angesehen werden. Diese Art der Regelung über das entschiedene Symbol wird als "entscheidungsrückgekoppelte" Regelung bezeichnet.

Da bei den digitalen Demodulatoren nach dem Stand der Technik die entscheidungsrückgekoppelten Regelungen miteinander verkoppelt sind, ist das Einrasten schwierig, solange die Regelung für den Träger des Lokaloszillators, der das Empfangssignal in das Basisband mischt, frequenz- und phasenmäßig noch nicht stabil ist. Oft gelingt das Einrasten nur, wenn die jeweiligen Frequenzen und Phasen relativ dicht bei ihren Sollwerten liegen. Beispiele für entscheidungsrückgekoppelte Regelungen finden sich in dem Grundlagenbuch: K.D. Kammeyer, "Nachrichtenübertragung", Verlag B.G. Teubner, Stuttgart, 2. Auflage 1996 im Kapitel 5.7.3 "Adaptiver Entzerrer mit quantisierter Rückführung", Seiten 200 bis 202, im Kapitel 5.8.3 "Entscheidungsrückgekoppelte Taktregelung", Seiten 213 bis 215 und im Kapitel 12.2.2 "Entscheidungsrückgekoppelte Trägerphasenregelung im Basisband", Seiten 429 bis 431.

Schaltungsanordnungen zum Ausbilden von Demodulatoren benutzen üblicherweise eine von zwei Taktrückgewinnungen, um einen geeigneten Abtastzeitpunkt für den Takt der Schaltungsanordnung bereitzustellen. Dies sind entweder die Gewinnung des Taktssignals durch nicht-lineare Verzerrung des Eingangssignals wie Gleichrichtung oder Potenzierung, vorteilhafterweise mit der Anzahl der Symbole, und eine anschließende Bandpassfilterung des Ergebnisses auf der erwarteten Symbolrate oder eine entscheidungsrückgekoppelte Taktrückgewinnung.

Das erstgenannte Verfahren ist insbesondere bei höherwertigen Modulationsverfahren zu ungenau. Das zweitgenannte Verfahren benötigt für richtige Symbolentscheidungen von vornherein ein phasentreues Basisbandsignal. Dazu muss die Trägerfrequenz- und Trägerphasenregelung jedoch bereits eingerastet sein, was im Prinzip aber nicht möglich ist, da durch den unbekannten Abtastzeitpunkt die Symbole noch nicht detektiert werden können und daher die entscheidungsrückgekoppelte Trägerfrequenz- und Trägerphasenregelung noch nicht eingerastet sein kann.

Die Aufgabe der Erfindung besteht darin, ein Verfahren zum Bestimmen des Abtastzeitpunkts eines Taktsignals für eine Schaltungsanordnung zum Bestimmen von Symbolen aus einem digitalisierten Signal, welches an zumindest ein Quadratursignalpaar eines Modulationsverfahrens gekoppelt ist, bzw. eine entsprechende Schaltungsanordnung zu verbessern.

Diese Aufgabe wird durch das Verfahren zum Bestimmen des Abtastzeitpunkts eines Taktsignals mit den Merkmalen des Patentanspruchs 1 bzw. die Schaltungsanordnung mit den Merkmalen des Patentanspruchs 12 gelöst.

Verfahrensgemäß wird die Aufgabe gelöst durch ein Verfahren zum Bestimmen eines Abtastzeitpunkts eines Taktsignals für eine Schaltungsanordnung zum Bestimmen von Symbolen bzw. Symbolcodes mit diskreten Amplituden aus einem digitalisierten Signal eines Modulationsverfahrens mit dem Schritt des Umsetzens des digitalisierten und demodulierten Signals in eine radiale Komponente, und die weiteren Schritte des Bestimmens eines Gütewertes der Signale anhand einer radiusbezogenen Lage der Signale bei einer ersten Abtastphase, welche relativ zu einem Basistaktzeitpunkt eines Basistaktes festgelegt ist, des Bestimmens eines weiteren Gütewertes von Signalen bei einer relativ zu der vorherigen Abtastphase variierten Abtastphase ($\varphi_{i2} = \varphi_i + \Delta\varphi$), des Ermittelns des besseren der bestimmten Gütewerte und des weiteren Verwendens der Abtastphase des besseren Gütewerts und des weiteren Variierens der Abtastphase, wobei die Gütewerte abhängig von einer Häufigkeitsverteilung der Signale in der radialen Komponente bestimmt werden.

Vorrichtungsgemäß wird die Aufgabe gelöst durch eine Schaltungsanordnung zum Bestimmen eines Abtastzeitpunktes eines Taktsignals für eine Schaltungsanordnung zum Bestimmen von Symbolen mit diskreten Amplituden aus einem digitalisierten Signal eines Modulationsverfahrens mit einer Taktsteuereinrichtung zum Ausgeben von Taktsignalen zu diskreten Abtastzeitpunkten, ein Polarkoordinatenumsetzer, dem das Signal zuführbar, und an dem ausgangsseitig wenigstens eine Radiuskomponente des Signals abgreifbar ist, zumindest ein erster Speicher, dem zumindest die Radiuskomponente zuführbar ist, und an dem ausgangsseitig eine Häufigkeitsverteilung der Radiuskomponenten abgreifbar ist, eine Schaltung zur Gütewertermittlung zu Signalen mit verschieden variierten Abtastphasen abhängig von der Häufigkeitsverteilung, der die Häufigkeitsverteilung zuführbar, und an der ausgangsseitig Gütewerte ab greifbar sind und einer Steuereinrichtung zum Variieren der Abtastphase gegenüber einem Basistaktzeitpunkt eines Basistaktes, der die Gütewerte zuführbar sind, und an der ausgangsseitig die Abtastphase des besseren Gütewerts abgreifbar ist.

Vorteilhafte Ausgestaltungen sind Gegenstand abhängiger Ansprüche.

Die Aufgabe wird ausgehend von Überlegungen zur Verteilung der empfangenen und bestimmten bzw. abgetasteten Signale relativ zu Sollradien gelöst. Dabei wird eine Abtastgüte definiert, die vom Zustand der Trägerregelung und eventuell vom Zustand der Amplitudenregelung unabhängig ist, und versucht, diese Abtastgüte zu erhöhen und damit die korrekte Abtastfrequenz und die korrekte Abtastphase zu bestimmen.

Der Signalvektor des gesendeten analogen Basisbandsignals wandert im I,Q-Raum von einem gesendeten codierten Symbol (Sollsymbol) zum nächsten. Die Verweildauer auf einem codierten Symbolpunkt oder in dessen Nähe einerseits sowie Geschwindigkeit und Weg zwischen den Symbolzeitpunkten andererseits werden in bekannter Weise durch Sender- und Empfängerfilter (Nyquist-Filter) bestimmt. Der Signalvektor ist nur zu den exakten Symbolzeiten genau auf einem codierten Symbol zu erwarten, während er im Mittel umso weniger einem zuzuordnen ist, je weiter man sich mit der Abtastphase in die Mitte zwischen zwei Symbolzeitpunkte bewegt.

Die Sollsymbole bzw. Symbole deren Codierungen lassen sich nicht nur in kartesischen Koordinaten (I, Q) ausdrücken, sondern auch in polaren Koordinaten (R, $\alpha$), so dass jedes Symbol durch einen Sollradius und einen Sollwinkel definiert ist. In den üblichen Modulationsverfahren wie z. B. 64-QAM ist die Anzahl der unterschiedlichen Sollradien wesentlich kleiner als die der Symbole, da auf einem Sollradius mehrere durch unterschiedliche Phasenwinkel unterschiedene Symbole liegen können.

Werden die Signale im Empfänger, der die Amplituden korrekt darstellt und dessen Trägerfrequenz- und Trägerphasenregelung eingerastet ist, zeit-, d. h. phasenrichtig abgetastet, stimmen die Positionen der empfangenen Signale im komplexen Amplituden- und -phasenraum mit denen der gesendeten Symbole bzw.

Symbolcodes überein. Ist bei korrekter Abtastung die Trägerfrequenz- und -phasenregelung noch nicht eingerastet, was eine Rotation oder Kippung des komplexen Amplituden- und - phasenraumes bewirken kann, sind ggf. die Phasenwinkel der Signale und damit auch die kartesischen Koordinaten betroffen, nicht jedoch ihre radiale Komponente, da sie von einem Winkelfehler des Empfangsamplituden- und Empfangsphasenraumes nicht beeinflusst wird. Damit fallen bei korrekter Abtastung und korrekter Verstärkung unabhängig von der Trägerregelung alle Radien der empfangenen Signale weiterhin auf die Sollradien bzw. auf die durch die Symbole vorgegebenen Radien, was bei der Lösung vorteilhaft ausgenutzt wird.

Liegt das empfangene Signal nur in kartesischen Koordinaten vor, kann in für sich bekannten Art und Weise aus den kartesischen Koordinaten die radiale Komponente bestimmt werden, z. B. durch die pythagoräische Formel, durch Tabellen, durch Näherungsverfahren oder durch eine Regelschaltung.

Aus der Verteilung der radialen Komponente der empfangenen Signale kann eine vom Zustand der Trägerfrequenz- und Trägerphasenregelung unabhängige Abtastgüte für die momentan gewählte Abtastfrequenz und -phase hergeleitet werden. Die Abtastgüte ist umso höher, je mehr der Radien der empfangenen Signale auf den Sollradien oder in deren unmittelbarer Nähe liegen.

Die Güte kann beispielsweise durch Abstandsbestimmung des empfangenen Radius zum nächsten Sollradius ermittelt werden. Die Güte ist umso höher, je niedriger der Mittelwert der Abstände ist, eine ideale Abtastung liegt vor, wenn jeder Radius eines empfangenen Signals auf einem Sollradius liegt und die Abstände somit null sind.

Alternativ können die Radien der empfangenen Signale z. B. in ein Entscheidungsraster einsortiert werden, das alle zu untersuchenden Sollradien umfassen soll. Aus der in einem Versuch mit einer ausreichenden Anzahl von empfangenen Signalen mit derselben Abtastfrequenz und -phase gewonnenen Dichteverteilung (Histogramm) lässt sich ebenfalls die Abtastgüte bestimmen, indem die Anzahl der auf die Sollradien oder in deren unmittelbare Nähe fallenden empfangenen Radien bewertet wird. Dazu werden alle Ereignisse auf den und um die Sollradien aufaddiert und ggf. in ein Verhältnis zu der Gesamtzahl der bei diesem Versuch empfangenen Signalwerte bzw. Abtastwerte oder zu der Anzahl der Signale, deren Radien in die Räume zwischen die Sollradien fällt, gesetzt.

Für höherwertige Modulationsverfahren mit einer Vielzahl eng beieinanderliegender Sollradien und Abständen zu anderen, vereinzelt angeordneten Sollradien, ist es vorteilhaft, für die Bestimmung der Abtastgüte lediglich einzelne aus der Vielzahl der Sollradien ausgewählte Radienbereiche zu betrachten. Zweckmäßigerweise wird bei der Betrachtung der Radienbereiche nicht nur der exakte Kreisring analysiert, sondern auch ein Toleranzbereich um den Sollradienbereich herum. Dabei ist es auch möglich, eine Wichtung vorzunehmen, so dass Signale direkt auf dem erwarteten Radiuswert höher gewichtet werden als Signale, die im Nachbarbereich eines Sollradius bzw. des zugehörigen Kreisringes in der polaren Koordinatenebene, bestimmt werden.

Bei einer Auswertung der Dichteverteilung der Radien bzw. des Histogramms durch nicht-lineare Methoden, wie beispielsweise Leistungsbildung durch Quadrierung, werden Häufungen im Ergebnis begünstigt. Während bei ungünstiger Abtastphase eine gleichmäßige Verteilung aller empfangenen Radien zu erwarten ist, tritt eine geringe Varianz, d. h. Häufung bei den Sollradien, nur bei günstiger Abtastphase auf, und zwar um so mehr, je besser die Abtastphase die tatsächliche zeitliche Phasenlage des empfangenen Symbols bzw. Symbolcodes trifft. Ein Abtastgütesignal durch eine solche Auswertung ist nicht nur vom Zustand der Trägerregelung, sondern auch vom Zustand der Verstärkungsregelung unabhängig, da die Tatsache der Häufung der Ereignisse um die Sollradien nicht von der Amplitudenskala des Empfängers beeinflusst wird. Ein Wissen über die absolute Lage der Sollradien auf der Amplitudenskala des Empfängers ist nicht erforderlich.

Diese Methode der Auswertung ohne vorgegebene absolute Werte für die Sollradien ist auch dann anwendbar, wenn die Lage der Sollradien nicht von vornherein bekannt ist, wie z. B. bei Mehrsender-/Mehrantennentechnik (transmitter diversity), solange beide Sender einen gemeinsamen Oszillator benutzen und solange die Symbolabtastzeitpunkte identisch sind. Allerdings erhöht sich wegen der quasi unabhängigen Symbole bei ZeitRaum-Codes oder wegen der absolut unabhängigen Symbole die Anzahl der Sollradien proportional zum Produkt der Modulationsstufigkeiten.

Geeignete Mittelungsverfahren erhöhen die Qualität eines nach den oben beschriebenen Methoden gewonnenen Gütesignals.

Eine Veränderung der Abtastphase um einen bestimmten Betrag bei gleicher Abtastfrequenz wird möglicherweise einen höheren oder niedrigeren Wert für die Abtastgüte zeigen. Durch fortlaufende systematische Wiederholung solcher Versuche mit Änderung der Abtastphase in die Richtung, in der die Abtastgüte höher wird, kann die optimale Abtastphase iterativ gefunden werden. Die Schrittweite der Veränderung der Abtastphase kann dabei dem Fortschritt des Verfahrens angepasst werden.

In einer möglichen Ausführungsform des Verfahrens werden die Abtastschaltung und nachfolgende Komponenten doppelt ausgeführt, wobei die beiden Abtastschaltungen mit geringfügig unterschiedlichen Abtastphasenlagen arbeiten. Durch Vergleich der aus diesen beiden Schaltungsteilen resultierenden Abtastgütewerte lässt sich direkt die Regelrichtung, in der eine bessere Abtastung des Signals zu erwarten ist, ableiten.

In einer anderen möglichen Ausführungsform des Verfahrens wird die Abtastphasenlage geringfügig periodisch verändert. Eine solche Modulation der Abtastphasenlage führt ggf. zu einer Modulation des Abtastgütewertes, wobei die Phasenlage der Modulation des Gütewertes die Regelrichtung, in der eine bessere Abtastung des Signals zu erwarten ist, anzeigt.

Alle genannten Verfahren können statt mit den Radien der empfangenen Signale auch mit den Radiusquadraten der empfangenen Signale arbeiten. Dadurch wird ggf. das Ziehen der Wurzel bei der Berechnung des Eingangssignals der Gütedetektion eingespart.

Vorteilhafterweise kann eine gefundene Abtastphasenlage für eine optimale Abtastung permanent durch eines der oben genannten Verfahren überwacht werden. Eine kontinuierliche Veränderung der gefundenen optimalen Phasenlage weist auf eine Frequenzdifferenz zwischen der gesendeten Symbolfrequenz und der gewählten Abtastfrequenz im Demodulator hin. Die erste Ableitung der optimalen Phasenlage ergibt den Wert für die notwendige Korrektur der gewählten Abtastfrequenz.

Eine Anwendung des Verfahrens bzw. eine entsprechende Schaltungsanordnung bieten sich insbesondere bei binären oder komplexen digitalen Modulationsverfahren wie PSK und QAM an.

In für sich bekannter Art und Weise ist es somit möglich, bei einem Verfahren zum Bestimmen des Abtastzeitpunkts eines Taktsignals für eine Schaltungsanordnung zum Bestimmen von Symbolen aus einem digitalisierten Signal, welches an zumindest ein Quadratursignalpaar eines Modulationsverfahrens gekoppelt ist, die radiale Komponente des digitalisierten Signals zu bestimmen. Bei einer ersten Abtastphasenlage eines Basistaktes, der relativ zu einem Basistaktzeitpunkt festgelegt ist, wird dann eine Abtastgüte bestimmt, bevor bei einem späteren variierten Abtastzeitpunkt, welcher relativ zu einem Basistaktzeitpunkt des ursprünglichen Basistaktes um eine Differenztaktdauer variiert ist, eine weitere Abtastgüte bestimmt wird. Durch die Wahl der Differenztaktdauer kleiner als eine ganzen Taktdauer oder ungleich eines ganzzahligen Vielfachen davon verschieben sich die Abtastzeitpunkte gegenüber dem ursprünglichen empfangenen analogen Signal, was sich in der Abtastgüte der erfassten Symbole widerspiegelt.

Nur zu einer bezüglich des Symboltaktes ideal gewählten Abtastphasenlage ist es möglich, eine optimale Abtastgüte zu erzielen. Daher kann davon ausgegangen werden, dass in der Regel die Abtastgüte bei der ersten Bestimmung und bei der späteren Bestimmung mit variierter Abtastphasenlage verschieden sind. Für die Entscheidung der besseren Abtastphasenlage wird diejenige Abtastphasenlage gewählt, bei der entsprechend die größere Abtastgüte der bestimmten Abtastgüten ermittelt wurde. Für die zukünftigen Abtastphasenlagen gegenüber dem Basistaktzeitpunkt des ursprünglichen Basistaktes wird somit ein Zeitpunkt gewählt, welcher entsprechend um die Differenztaktdauer, welche bei der höheren Abtastgüte verwendet wurde, zeitlich verschoben wird, sofern nicht bereits bei der ersten Bestimmung eine höhere Abtastgüte ermittelt wurde. Natürlich kann diese Vorgehensweise auch wiederholt verwendet werden, um mit Hilfe einer weiteren Verschiebung in der gleichen Richtung oder der entgegengesetzten Richtung festzustellen, ob tatsächlich bereits der ideale Abtastzeitpunkt ermittelt wurde.

Eine Anwendung des Verfahrens bzw. einer entsprechenden Schaltungsanordnung bietet sich insbesondere bei binären oder komplexen digitalen Modulationsverfahren wie BPSK (Binär Phase Shift Keying), QPSK und QAM an. Derartige Modulationsverfahren werden von den meisten neueren Rundfunk-, Fernseh- und Datendiensten über Kabel, Satellit und teilweise terrestrisch benutzt.

Ein Ausführungsbeispiel wird nachfolgend anhand der Zeichnung näher erläutert. Es zeigen:

Fig. 1 eine Schaltungsanordnung zum Bestimmen von Symbolen aus einem digitalisierten Signal, welches an zumindest ein Quadratursignalpaar eines Modulationsverfahrens gekoppelt ist, wobei die Schaltungsanordnung eine Einrichtung zum Bestimmen des Abtastzeitpunkts des Taktsignals aufweist und das Symbol bei freilaufendem A/D-Wandler über eine rein digitale Abtastratenwandlung gewonnen wird;

Fig. 2A - 2C für sich bekannte Signaldarstellungen im digitalen und analogen Bereich eines Senders sowie mit richtiger Taktwahl und falscher Taktwahl eines Empfängers;

Fig. 2D eine Darstellung der Symbolanordnung von 16-QAM im kartesischen komplexen Koordinatenraum;

Fig. 3A, 3B: eine Häufigkeitsverteilung über dem Radius bzw. eine Signalverteilung in der komplexen polaren Symbolraumdarstellung von 64 QAM;

Fig. 4 ein Ablaufdiagramm zur Durchführung eines Verfahrens zur Abtastzeitpunkt-Bestimmung und

Fig. 5 einen detaillierteren Ausschnitt einer Detektionsschaltungsanordnung aus Fig. 1.

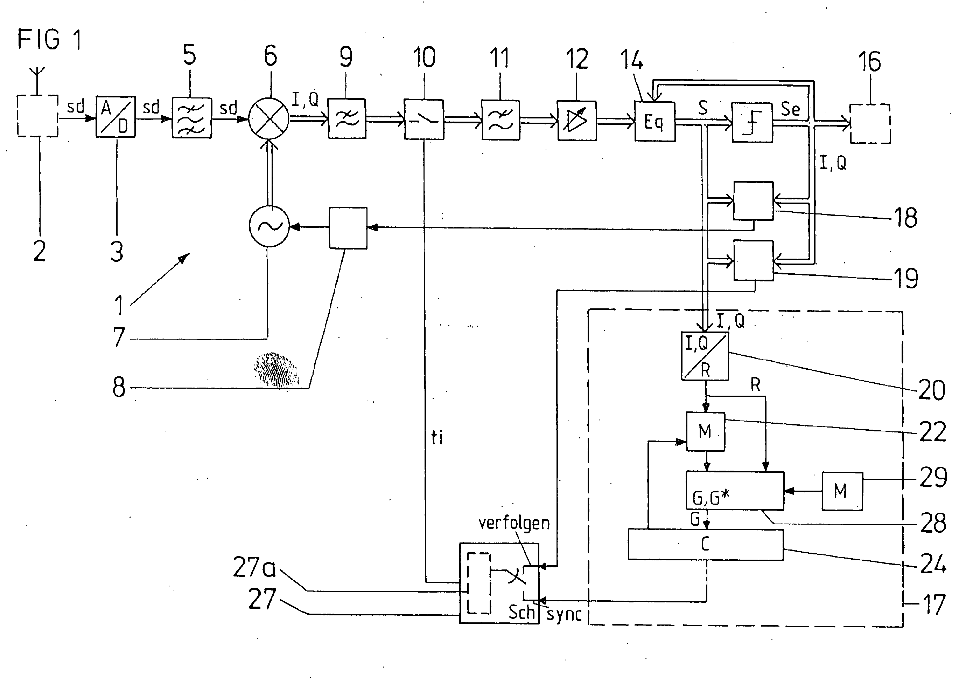

Wie dies aus Fig. 1 ersichtlich ist, besteht ein Demodulator 1 als beispielhafte Schaltungsanordnung zum Bestimmen von Symbolen, Se aus einem digitalisierten Signal sd, welches an ein Quadratursignalpaar eines Modulationsverfahrens, z. B. gemäß einem QAM-Standard, gekoppelt ist, aus einer Vielzahl von Einzelkomponenten. Diese können alle oder einzeln auch Bestandteil einer integrierten Schaltung sein. Insbesondere sind nachfolgend beschriebene Komponenten je nach Anwendungszweck weglassbar oder um weitere Komponenten ergänzbar. Auch ist die Weiterführung von Signalen als reelle Signale, komplexe Signale oder einzelne komplexe Signalkomponenten je nach Anwendungszweck und spezieller Schaltungsanordnung entsprechend anpassbar.

Bei der dargestellten Ausführungsform empfängt der Demodulator 1 an einem Eingang von einer Signalquelle 2, beispielsweise einem Tuner, ein analoges Signal sa. Dieses analoge Signal sa, welches üblicherweise in einer bandbegrenzten Zwischenfrequenzlage vorliegt, wird einem AD-Umsetzer 3 (AD: Analog/Digital) zum Umsetzen in ein digitales Signal sd zugeführt. Das digitale Signal sd wird vom AD-Umsetzer 3 zu einem Bandpass-Filter 5 geführt, welcher das digitale Signal von Gleichanteilen und störenden Oberwellen befreit.

Das vom Bandpass-Filter 5 ausgegebene Signal wird einem Quadraturumsetzer 6 zugeführt, welcher das digitale bzw. digitalisierte Signal sd in das Basisband umsetzt. Das Basisband entspricht den Anforderungen des Demodulators 1 und des verwendeten Modulationsverfahrens. Entsprechend gibt der Quadraturumsetzer das in die beiden Quadratursignalkomponenten I, Q des kartesischen Koordinatensystems aufgesplittete digitalisierte Signal sd aus. Zur Frequenzumsetzung wird der Quadraturumsetzer 6 üblicherweise mit zwei um 90° versetzten Trägern aus einem lokalen Oszillator 7 gespeist, dessen Frequenz und Phase durch eine Trägerregeleinrichtung 8 gesteuert wird. Die Quadratursignalkomponenten I, Q werden einem Tiefpass-Filter 9 zugeführt, welcher zur Beseitigung störender Oberwellen dient. Das derart gefilterte Quadratursignalpaar I, Q bzw. die beiden Quadratursignalkomponenten I, Q werden dann einer Symbol-Abtasteinrichtung 10 zugeführt. Die Steuerung der Symbol-Abtasteinrichtung 10 erfolgt über einen Eingang, dem das Abtastsignal $t_i$ zugeführt wird. Die Symbol-Abtastzeitpunkte $t_i$ orientieren sich im normalen Betriebszustand an der Symbolfrequenz 1/T und üblicherweise auch an der genauen Phasenlage des im empfangenen Signal sd, S enthaltenen Symbols Se.

Die Symbolabtastzeitpunkte ti werden in einer Abtastregeleinrichtung 27 erzeugt, die aus einem Schalter Sch und der eigentlichen Funktionseinheit 27a besteht.

Das Ausgangssignal der Abtasteinrichtung 10 wird mittels eines Tiefpassfilters 11 mit einer Nyquist-Chärkteristik gefiltert und einer Verstärkungsregeleinrichtung 12 zugeführt, welche die mittlere Signalstärke auf den Erwartungswert der verwendeten Modulationsart regelt und den Aussteuerbereich eines Symbolentscheiders 15 optimal ausnutzt. Das von der Verstärkungsregeleinrichtung 12 ausgegebene Signal wird einem Entzerrer (Equalizer) 14 zugeführt. Der Entzerrer 14 befreit die beiden Komponenten des Quadratursignalpaares I, Q von störenden Verzerrungen und stellt ein Signal S an seinem Ausgang bereit. Nachfolgend werden aus derart bereitgestellten abgetasteten Signalen mittels des Symbolentscheiders 15 die Symbole Se gebildet.

Diese Signale S und Symbole Se werden dann weiteren digitalen Signalverarbeitungseinrichtungen 16 und vorzugsweise auch den entscheidungsrückgekoppelten Regelkreisen bzw. Komponenten im Demodulator 1 direkt oder indirekt zugeführt.

Insbesondere werden die Signalströme S und Signalströme Se verglichen, und zwar im Entzerrer 14, um die Filterkoeffizienten zu adaptieren, in einem Phasenfehlerdetektor 18, um Phasen- und Frequenzfehler der Trägerregelung zu detektieren und die Trägerregeleinrichtung 8 entsprechend anzusteuern, und in einem Abtastfehlerdetektor 19, um im eingerasteten Zustand Fehler in der Abtastfrequenz und Abtastphase zu detektieren und die Abtastregeleinrichtung 27 entsprechend anzusteuern. Der Phasenfehlerdetektor 18 und der Abtastfehlerdetektor 19 bekommen als Eingangssignale das aus dem Entzerrer 14 ausgegebene Signal S und das aus dem Entscheider 15 ausgegebene Symbol Se zugeführt.

Solange die Trägerregelung mit den diversen Komponenten, insbesondere dem Phasenfehlerdetektor 18, der Trägerregeleinrichtung 8, dem lokalen Oszillator 7 und dem Quadraturumsetzer 6, noch nicht eingerastet ist, stellt eine besondere Detektionsschaltung 17 als Teil oder Zusatz einer Taktsteuereinrichtung das Eingangssignal für die Abtastratenregeleinrichtung 27 zur Verfügung. Die Detektionsschaltung 17 besteht aus einer Vielzahl von Bauelementen, die auch teilweise oder ganz in einer einzigen integrierten Schaltung oder Schaltungskomponente aufgenommen sein können. In der Detektionsschaltung 17 wird von einem Koordinatenumsetzer 20 der Radius des diesem zugeführten komplexen Signal S aus dem Entzerrer 14, das im kartesischen Koordinatensystem I, Q vorliegt, bestimmt. Das kann entweder gemäß der Beziehung $R = \sqrt{(I^2 + Q^2)}$, mit einer Tabelle, einem Näherungsverfahren oder auch dem Cordic-Algoritmus erfolgen.

Es ist möglich, alle nachfolgenden Schritte in der Detektionsschaltung 17 auch auf einer durch $R^2$ aufgespannten Skala bzw. in einem durch $R^2$ aufgespannten Raum durchzuführen. Dadurch erübrigt sich die oft komplizierte Berechnung der Quadratwurzel. Die nachfolgend beschriebenen Tabellen und anderen Verfahren sind entsprechend anzupassen.

Die Detektionsschaltung 17 weist ferner eine Schaltung zur Gütewertermittlung 28 auf, der zumindest die Radiuskomponente R aus dem Koordinatenumsetzer 20 zugeführt wird und die ein Signal G, das die Güte der Abtastung repräsentiert bzw. darstellt, an eine Steuereinrichtung 24 ausgibt, die ihrerseits ein ermitteltes Abtastphasenregelsignal an die Abtastregeleinrichtung 27 ausgibt. Außerdem steht die Schaltung zur Gütewertermittlung 28 mit zwei Speichereinrichtungen 22 und 29 in Verbindung, wobei der ersten dieser Speichereinrichtungen 22 ebenfalls zumindest die Radialkomponente R zugeführt wird, die der Koordinatenumsetzer 20 ausgibt. Diese erste Speichereinrichtung ist so geschaffen, dass sie aus der zugeführten Radialkomponente R eine Dichteverteilung bildet. Die zweite Speichereinrichtung 29 enthält eine Tabelle mit Sollradien Ra - Ri enthält.

Zur Steuerung, der ersten Speichereinrichtung 22, der Schaltung zur Gütewertermittlung 28 und weiterer der Komponenten des Demodulators 1 stehen diese mit einer Steuereinrichtung 24, C in Verbindung. Die Steuereinrichtung 24 bewirkt einen ordnungsgemäßen Ablauf und steuert die einzelnen Komponenten und Abläufe entsprechend Hard- oder Software-gestützen Anweisungen. Vorzugsweise kann die Steuereinrichtung C auch Funktionen einzelner der genannten Komponenten ganz oder teilweise in sich integriert aufweisen.

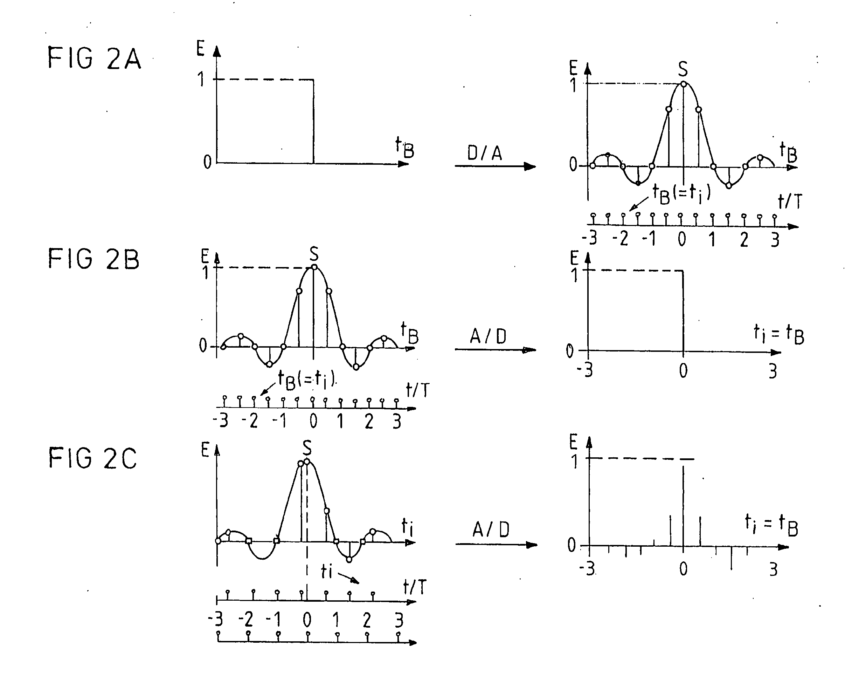

Vor der Beschreibung des Verfahrensablaufs zur Bereitstellung eines optimierten Abtastsignals $t_i$ werden nachfolgend die dazu ausgenutzten Grundlagen der üblichen Signalverarbeitung und deren Ausnutzung in der Schaltungsanordnung beschrieben. In den Fig. 2A - 2C sind jeweils rechts und links eines DA-Umsetzvorgangs bzw. AD-Umsetzvorgangs ein ideales Impulsdiagramm und ein analoges Nyquist-Wavelet dargestellt. Aufgetragen sind eine Amplitude E über der Zeitachse t, auf welcher die diskreten Basistaktzeitpunkte $t_B$ markiert sind. Fig. 2C zeigt außerdem eine Zeitachse mit gegenüber dem Basistakt $t_B$ versetzten tatsächlichen Abtastzeitpunkten $t_i$.

Senderseitig wird beispielsweise ein Impuls mit der Amplitude 1 bereitgestellt und in ein analoges Nyquist-Wavelet umgesetzt (Fig. 2A).

Fig. 2B und 2C zeigen ein vom Empfänger empfangenes Wavelet. Fig. 2B geht von einem ideal getakteten Abtastsignal aus, bei dem auf den maximalen zentralen Wert des Wavelets ein Abtastzeitpunkt fällt, während die weiteren Abtastzeitpunkte jeweils auf Null-Durchgänge des Wavelets fallen und somit keinen Signalbeitrag liefern. Der ausgegebene digitale Impuls hat somit den rekonstruierten ursprünglichen Amplitudenwert E = 1. Bei dem vorliegenden Ausführungsbeispiel geht es nur indirekt um diese Nyquist-Bedingungen. Der Vektor bewegt sich im Phasenraum von einem Symbolcode bzw. Se zum nächsten. Ist er irgendwo auf der Strecke dazwischen, kann er nicht auf einem Symbolcode liegen. Gesucht werden letztendlich die richtigen Positionen für den Zeiger, welche bei einer richtig ermittelten Abtastphase und Abtastfrequenz vorliegen.

Bei dem Beispiel der Fig. 2C wird von einem zeitlich versetzten Taktsignal ausgegangen, bei dem nicht der zentrale, maximale Amplitudenwert des Wavelets, sondern anstelle dessen ein geringerer Amplitudenwert abgetastet wird. Nach der Abtastung wird folglich ein zentraler maximaler Amplitudenwert mit einer gegen der ursprünglichen Amplitude reduzierten Amplitude E ausgegeben. Außerdem werden die Amplituden der benachbarten Abtastsignale, deren Zeitpunkte nun nicht mehr genau auf die Nullstellen des Wavelets des betrachteten Symbols fallen, durch das betrachtete Symbol entsprechend beeinflusst und umgekehrt, und zwar umso mehr, je weiter der Abtastzeitpunkt vom idealen Abtastzeitpunkt abweicht.

Im Fall der nicht idealen Abtastung gemäß Fig. 2C werden durch die Symbol-Abtasteinrichtung 10 entsprechend interpolierte Abtastwerte für die weitere Verarbeitung als Daten zur Verfügung gestellt. Bei der Übertragung eines digitalen Datenstroms werden die einzelnen Nyquist-Impulse taktweise einander überlagert und als I- und Q-Komponenten von der Symbol-Abtasteinrichtung 10 ausgegeben. In der I, Q-Signalwertebene, die zugleich die Symbolcode- und Phasenebene darstellt, werden durch solche Abtastungen, die von den idealen Zeitpunkten abweichen, Koordinaten von Punkten detektiert, die auf dem Weg des Phasenvektors von einem Symbolcode zum nächsten liegen.

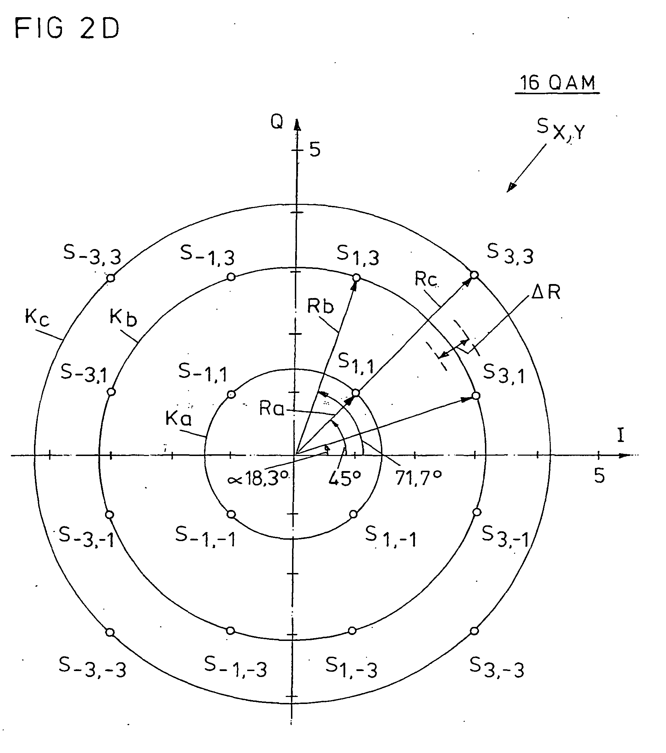

Fig. 2D stellt die von einem Quadratursignalpaar I, Q aufgespannte kartesische Koordinatenebene auf, in der von 16 Symbolen $S_{x,y}$ eines 16-QAM-Signals die entsprechenden Positionen eingezeichnet sind. Die Indices x,y entsprechen dabei den jeweiligen kartesischen Koordinaten, bei denen die 16 Symbole bei idealer Abtastung zu ermitteln wären. Dargestellt sind auch drei Kreise Ka, Kb, Kc, auf welchen die Symbole $S_{x,y}$ gemäß den Vorgaben des 16-QAM-Verfahrens liegen. Wenn der Maßstab des Koordinatensystems so gewählt ist, dass das innerste Symbol des ersten Quadranten bei (1,1) liegt, sind den Kreisen Ka, Kb, Kc vom Koordinatenursprung aus gerechnet Radiuswerte $R_a$ = 1,41; $R_b$ = 3,16 bzw. $R_c$ = 4,24 zugeordnet. Zur Definition der Signale $S_{x,y}$ über ihre Polarkoordinaten R, $\alpha$ sind die jeweiligen Winkelkomponenten $\alpha$ erforderlich. Die Berechnung der Polarkoordinaten, zumindest der Radiuskomponente oder ihres Quadrates, erfolgt in der vorstehend beschriebenen Schaltungsanordnung in dem Koordinatenumsetzer 20.

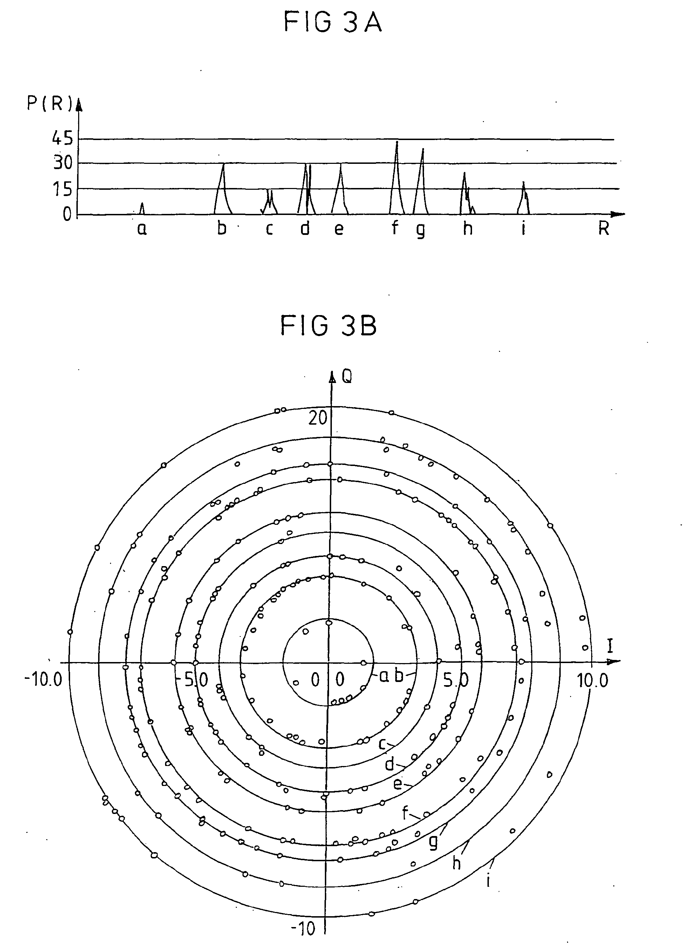

Fig. 3A zeigt die Verteilung der Radius-Komponente R nach der Ausgabe polarer Koordinaten aus dem Koordinatenumsetzer 20 in einem 64-QAM-System. Dargestellt ist dabei die Häufigkeit der Radien der vom Entzerrer 14 ausgegebenen und durch den Koordinatenumsetzer 20 in polare Koordinaten umgesetzten Signale S. Selbiges gilt entsprechend auch für die Verwendung des Quadrates $R^2$ der Radiuskomponente R.

Fig. 3B stellt beispielhaft die Positionen von bestimmten bzw. abgetasteten Signalen in dem 64-QAM-System dar. Neben den durch kleine Kreise dargestellten ermittelten bzw. bestimmten Signalen sind auch Kreisringe a - i dargestellt, welche durch die vom Modulationssystem vorgegebenen Radien $R_a$ - $R_i$ definiert bzw. festgelegt sind.

Bei einem Vergleich der Figuren 3A und 3B ergibt sich eine Anzahl von 8 Symbolen auf dem inneren Kreis a, etwa 34 Symbolen auf dem nachfolgenden Kreis b, und etwa 17, 33, 44, 39, 26 und 19 bestimmten Symbolen auf oder im Bereich der nachfolgenden Kreisringe c - i.

Unter Berücksichtigung der anhand der Figuren 2A - 2D und 3A, 3B beschriebenen Grundlagen wird nachfolgend ein Verfahren zum Bestimmen eines optimierten Abtastzeitpunkts während des Beginns einer Empfangsperiode, bei der die Trägerregelung (18, 8, 7, 6) noch nicht eingerastet ist, angegeben.

Die dargestellte Häufigkeitsverteilung der Radien der abgetasteten komplexen Signale ist dabei das grundlegende Kriterium für die Gütesignal- bzw. Gütewertbestimmung, da die Radien im Gegensatz zu den kartesischen Koordinaten weder von Freguenzoffsets noch von Phasenoffsets der Trägerregelung abhängig sind. Daher wird für den Beginn einer Empfangsperiode, in der die Trägerregelung noch nicht eingerastet ist, unter Berücksichtigung der bestimmten Sollradien des jeweils verwendeten Modulationsverfahrens der Abtastzeitpunkt durch die Detektionsschaltung 17 in der Abtastregeleinrichtung 27 systematisch so variiert, dass das Abtastgütesignal G optimiert wird und damit eine richtige Abtastfrequenz- und Abtastphasenlage erreicht wird.

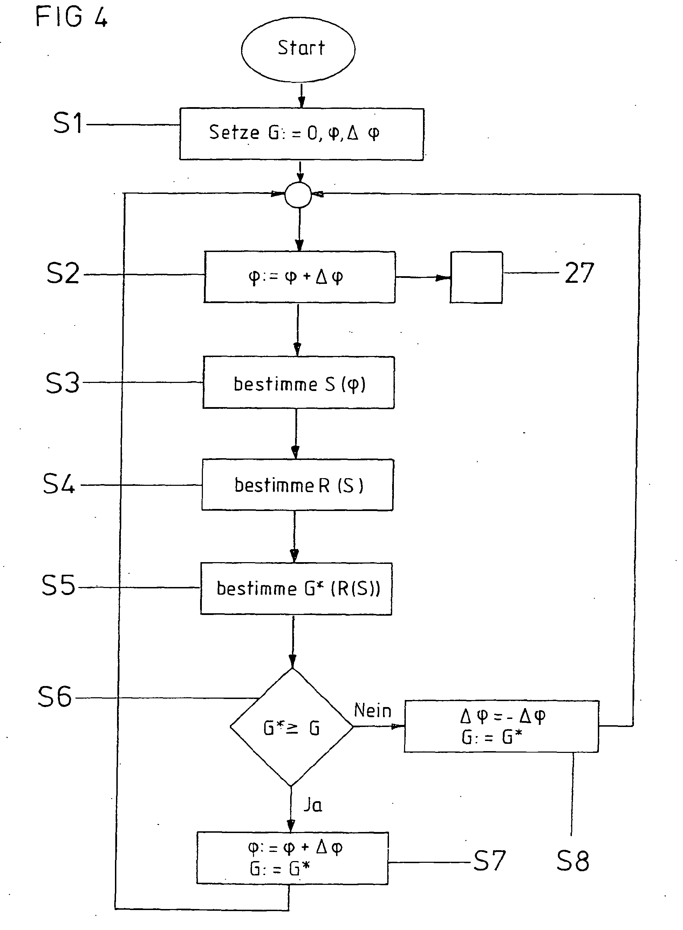

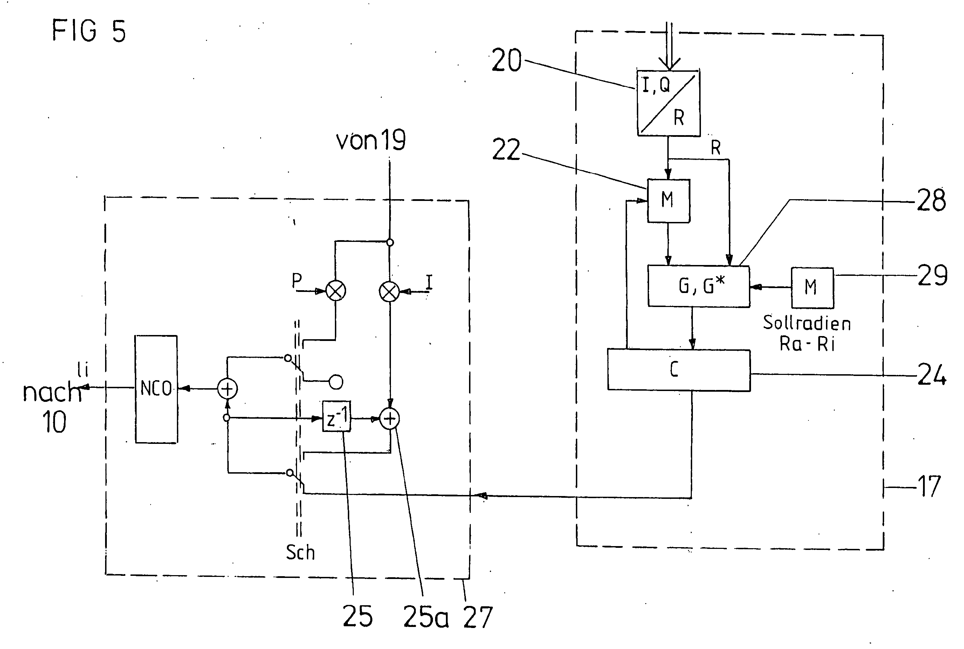

Ein beispielhafter Verfahrensablauf beginnt gemäß Fig. 4 mit der Annahme, dass die in Fig. 1 und 5 dargestellte Trägerregelung 18, 8, 7, 6 noch nicht eingerastet sei, weshalb ein Schalter Sch in der Abtastregeleinrichtung 27 in eine erste Stellung "sync" gebracht wird. In der Abtastregeleinrichtung 27 wird die Abtastfrequenz 1/T so gewählt, dass sie der vermuteten Symbolrate entspricht. Die Abtastphase kann zunächst beliebig gewählt werden. Das in der Abtastregeleinrichtung 27 erzeugte Abtastsignal $t_i$ wird bei dem dargestellten Ausführungsbeispiel der Abtasteinrichtung 10 zugeführt.

In einem ersten Versuch wird nach dem Start des Programms eine Festlegung von Parametern vorgenommen. Der Gütewert G wird auf Null gesetzt. Außerdem wird die Abtastphase φ bzw. Δφ festgelegt(S1). Nachfolgend wird in einem zweiten Verfahrensschritt S2 der Wert der Abtastphase φ um die Differenz-Abtastphase Δφ erhöht. Dieser Wert wird der Abtastregeleinrichtung 27 zugeführt.

Nachfolgend wird für eine festgelegte Anzahl, die mit z. B. 1000 Symbolen S bei 9 Sollradien eine Statistik zeigen sollte, mit der gewählten Abtastfrequenz f und der gewählten Abtastphase φ das Signal S (φ) in der Abtasteinrichtung 10 abgetastet (S3). Für die so entstehenden abgetasteten Signale bzw. Signalwerte S wird jeweils deren Radius bestimmt(S4). Dieses dadurch definierte Entscheidungsraster kann vorteilhafterweise alle Sollradien umfassen. Die Auflösung wird zweckmäßigerweise so groß gewählt, dass die Bereiche um die Sollradien, in denen man bei idealem Abtastzeitpunkt alle gemessenen Radien erwartet, von den Bereichen zwischen Sollradien, auf denen man bei idealem Abtastzeitpunkt keine Ereignisse erwartet, gut unterschieden werden können. Zum Abschluss wird in der Schaltung 28 aus der Anzahl der auf den Sollradien und in deren näherer Umgebung liegenden empfangenen Radienwerten im Vergleich zu der Anzahl der abseits von Sollradien liegenden empfangenen Radienwerte der Gütewert G* für die Abtastgüte dieses Versuches bestimmt (S5). Die Werte der Sollradien werden in der Speichereinheit 29 vorgehalten.

Für einen neuen Versuch wird von der Kontrolleinrichtung 24 eine variierte Abtastphase ($\varphi_{i2} = \varphi_{i1} + \Delta\varphi$ gewählt und der Abtastregeleinrichtung 27 übergeben. Mit dieser neuen Abtastphase werden für die festgelegte Anzahl von Symbolen wiederum die Radien berechnet (S4) und die Abtastgüte G* bestimmt (S5).

Ist der Gütewert G* bei dieser neuen Abtastphase höher (S6), wird vor einem weiteren Versuch die Abtastphase weiter in diese Richtung variiert (S7). Ist der neue Gütewert G* kleiner, wird vor einem weiteren Versuch die Abtastphase in die andere Richtung variiert (S8). Dieses Verfahren wird fortgesetzt, bis die richtige Abtastphasenlage gefunden ist. Die Variationsgröße der Abtastphase kann dem Verlauf der Optimierung angepasst werden.

Die Detektions- bzw. Erfassungsschaltung 17 kann ohne Wissen über die Sollradien und damit ohne Speichereinheit 29 auskommen, wenn zur Bestimmung der Abtastgüte die nach einem Versuch in der Speichereinrichtung 22 vorliegende Radienverteilung auf eine Häufung um insbesondere diskrete Radien untersucht wird. Das kann z. B. mit Quadrierung der Einzelhäufigkeiten und anschließender Summenbildung erfolgen. Der Gütewert G, G* ist umso besser, je höher die Summe ist.

Statt mit Versuchen mit einer festgelegten Symbolzahl zur Ermittlung des Gütewertes G, G* mit Hilfe einer Häufigkeitsverteilung kann die Schaltung zur Gütewertermittlung 28 auch so konstruiert sein, dass der Gütewert G der momentanen Abtastphase kontinuierlich durch Bestimmung des Gütewertes je Symbol und durch fortgesetzte Tiefpassfilterung dieses Ergebnisstroms ermittelt wird. Dazu werden Differenzen der empfangenen Radien zum jeweils nächstgelegenen Sollradius, deren Werte in der Speichereinheit 29 vorgehalten werden, ermittelt und diese Radiusdifferenzen tiefpassgefiltert. Dabei ist der Gütewert G umso besser, je niedriger dieses Ergebnis ist. Dabei können z. B. Bereiche mit vielen eng beieinanderliegenden Radien ausgeblendet werden oder die Höhe der Differenz je Ereignis begrenzt oder sonstwie gewichtet werden. Diese Variante kommt ohne die Speichereinrichtung 22 aus.

Der Einsatz dieser Verfahren ist prinzipiell mit jeweils neu empfangenen Signalen möglich. Für eine sichere Justierung unter Ausschluss von Schwankungen bei den empfangenen Signalen ist es jedoch auch möglich, eines oder mehrere empfangene analoge Signale oder die digitalisierten Signale in einem Punkt vor der Symbol-Abtasteinrichtung 10 zwischenzuspeichern. Dadurch können für die Versuche stets gleiche Signalfolgen sa, sd verwendet werden. Die Versuche können nacheinander für verschiedene Abtastzeitpunkte $\Delta t_i$ bzw. Abtastphasen $\varphi_i$, $\varphi_{i2}$ mit denselben abgespeicherten Signalen der bestimmten Anzahl durchgeführt werden. Bei Vorliegen von parallelen Schaltungen oder parallelen Strukturen einer entsprechenden Software ist es auch möglich, die Versuche für verschiedene Abtastphasen zu parallelisieren. Insbesondere bietet sich eine parallele Betrachtung von zwei Abtastphasen $\varphi_i$ an, um die Richtung der Variation zur optimalen Phasenlage erkennen zu können.

Eine gefundene optimale Abtastphase wird vorteilhafterweise permanent überprüft. Dazu bietet sich ein Vergleich der Gütewerte G von Versuchen mit etwas voreilender und etwas nacheilender Phasenverschiebung relativ zur optimalen Abtastphase an. Eine stetige Änderung des optimalen Zeitpunktes der Abtastphase weist auf eine Differenz zwischen gesendeter Symbolfrequenz und gewählter Abtastfrequenz hin. Mathematisch ergibt sich die Differenz zwischen gesendeter Symbolfrequenz und momentaner Abtastfrequenz 1/T aus der Ableitung der Verschiebung der optimalen Abtastphase. In einem solchen Fall korrigiert die Kontrolleinheit bzw. Steuereinrichtung 24 das Abtastintervall T in der Abtastregeleinrichtung 27 durch Veränderung der der Abtastregeleinrichtung 27 zugeführten Steuerspannung.

Alle diese Verfahren beruhen lediglich auf der Beobachtung der Radien des Signals S und sind unabhängig von dessen Phasenlage und damit auch unabhängig vom Zustand der Trägerregelung (18, 8, 7, 6) .

Ist die Trägerregelung schließlich eingerastet, kann der Schalter Sch auf eine zweite Stellung "verfolgen" gestellt werden. Zugeführt wird nun das Ausgangssignal des herkömmlichen Abtastfehlerdetektors 19, dem das Signal S vor dem Entscheider 15 und das Symbol Se zugeführt wird. Die Abtastung wird nun durch die an sich bekannte entscheidungsrückgekoppelte Abtastregelung gesteuert.

Figur 5 zeigt ein Ausführungsbeispiel der Abtastregeleinrichtung 27. Beschrieben werden im Wesentlichen nur einzelne Komponenten, um Wiederholungen zu vermeiden. Gleiche Bezugszeichen symbolisieren Bauelemente bzw. Signale mit gleicher oder ähnlicher Funktion und Wirkungsweise wie dies vorstehend beschrieben ist. Bei diesem Ausführungsbeispiel besteht die Abtastregeleinrichtung 27 aus einem numerischen Oszillator 26, einem doppelpoligen Umschalter Sch und einem PI-Regelfilter, das wiederum aus zwei Koeffizientenmultiplizierern für den proportionalen (P) und integralen (I) Verstärkungsanteil, einem Addierer zum Zusammenführen der P- und I-Regelgrößen, einem Addierer 25a und einem Verzögerungsglied 25 besteht. Der numerische Oszillator wird im einfachsten Fall aus einem Akkumulator mit Modulo-Überlauf gebildet. Ein vorher definierter Zustand des Akkumulators, z. B. 0 oder Überlauf, generiert das Abtastsignal ti.

Der numerische Oszillator 26 akkumuliert die Eingangsgröße. Eine ständig anliegende Größe definiert die Frequenz 1/T des Abtastsignals $t_i$. Eine in nur einem Systemtakt anliegende Größe bewirkt eine Phasenverschiebung des Abtastsignals ti.

Befindet sich der Schalter Sch in der ersten Stellung "sync", kontrolliert die Kontrolleinrichtung 24 den numerischen Oszillator 26 und den Inhalt des Verzögerungsgliedes 25. Die Kontrolleinrichtung 24 wählt nach dem vorstehend beschriebenen Verfahren eine Abtastfrequenz durch eine Konstante sowie eine Abtastphase durch einmaliges Überlagern der Winkeldifferenz relativ zur alten Abtastphase auf die genannte Konstante. Das weitere Vorgehen ist wie vorstehend beschrieben.

Befindet sich der Schalter Sch in der zweiten Stellung "verfolgen", wird der Abtastphasenfehler im Abtastfehlerdetektor 19 detektiert und der Abtastfrequenz über ein an sich bekanntes Verfahren durch den PI-Regler mit der proportionalen Verstärkung P und der integralen Verstärkung I sowie den numerischen Oszillator 26 nachgeführt. Bei der Umschaltung von "sync" nach "verfolgen" bleibt die durch die Detektionsschaltung 17 für richtig befundene Abtastfrequenz 1/T im Verzögerungsglied 25, das nun mit der unteren Hälfte des Umschalters und dem Addierer 25a einen Integrator bildet, erhalten, bis sie ggf. durch eine vom Abtastfehlerdetektor 19 kommende Fehlerspannung über den Multiplizierer mit dem Koeffizienten I ausgeregelt wird.

Auch bei weiteren beispielhaften Anordnungsmöglichkeiten für die Schaltungsanordnung ist das Verfahren einsetzbar. Z. B. kann von der Taktsteuereinrichtung ein zentral geregelter Abtast- und Digitalisierungstakt in Form des Abtastsignals $t_i$ dem AD-Umsetzer 3 gemäß Fig. 1 zugeführt werden. Durch die Taktsteuerung 17 wird das Abtastsignal $t_i$ letztendlich genau auf den für das empfangene Symbol bzw. Signal sa synchronisiert. Dadurch kann auch eine spätere Interpolation in der Abtasteinrichtung als eigene Funktionseinheit (10 in Fig. 1) entfallen. Der Tiefpass 9 nach dem Quadraturumsetzer 6 ist nicht mehr erforderlich. Seine begrenzende Wirkung übernimmt der Tiefpass 11 mit der Nyquist-Charakteristik.

Insbesondere ist es möglich, bei alternativen Ausführungsanordnungen die Schnittstelle für die Digitalisierung, d. h. den AD-Umsetzer 3, auch erst nach dem Quadraturumsetzer 6, der dann ebenso wie der lokale Oszillator 7 eine analoge Ausführungsform hat, einzusetzen, beispielsweise dann, wenn die Zwischenfrequenzlage des von der Signalquelle 2 gelieferten Eingangssignals sa zu hoch ist.

Bei der Verfahrensweise wird somit davon ausgegangen, dass die Trägerfrequenz der Schaltungsanordnung, d. h. des Demodulators 1 noch nicht stimmt und deshalb das ganze Koordinatensystem der Schaltungsanordnung gegenüber dem Koordinatensystem des Eingangssignals rotiert. Daher funktionieren die üblichen entscheidungsrückgekoppelten Regelungen noch nicht. Bei der vorgeschlagenen Verfahrensweise kann diese Rotation ignoriert werden. Der Abtasttakt, der im A/D-Wandler oder in einer nachfolgenden rein numerischen Abtastratenwandlung benötigt wird, stimmt bezüglich der Phase und möglicherweise in beschränktem Umfang auch bezüglich der Frequenz nicht. Ziel der Verfahrensweise ist es, den Abtasttakt $t_i$ einzufangen.

Für diese Taktakquisition steht die Schaltungsanordnung 17 zur Verfügung. In dieser werden ausschließlich die Radien R der vorläufigen Symbole S betrachtet. Da die Signalgröße insgesamt stimmen sollte, erfolgt eine Amplitudenregelung auf den Erwartungswert.

Die Schaltungsanordnung 17 für die Taktakquisition gibt einen Takt aus, der noch Abweichungen hinsichtlich der Phase und der Frequenz aufweist.

Für die eigentliche Taktakquisition werden viele Symbole mit Blick auf deren Lage relativ zu den Sollradien in einem Verteilungsraster einsortiert. Nach der derartigen Einsortierung von n Symbolen wird das Verteilungsmuster ausgewertet. Dabei kann beispielsweise die Summe der Symbole auf den Sollradien oder die Summe der Symbole in einem gewissen Toleranzbereich um die Sollradien herum, ggf. mit einer Wichtung, betrachtet werden. Möglich sind auch alternativ Betrachtungsweisen von Summen der Symbole innerhalb von Zwischenräumen oder Summen der Quadrate der Symbole je Rasterzelle.

Eine tabellarische Auflistung von mehreren Versuchsabläufen mit jeweils verschiedener Phase zeigt die zunehmende Verbesserung der bestimmten Taktsignale nach einer kontinuierlichen Variation der Phase $\varphi$ um eine Phasendifferenz $\Delta\varphi$:

| Abtastgüte G | Raster (R) | | | | | | | | | $\Sigma(S(R))$ | $\Sigma(S(R)^2)$ |
|---|---|---|---|---|---|---|---|---|---|---|---|
| schlecht | 1 | 2 | 1 | 2 | 2 | 1 | 3 | 1 | 1 | 14 | 26 |
| besser | 0 | 1 | 0 | 2 | 3 | 4 | 3 | 1 | 0 | 14 | 40 |

(fortgesetzt)

| Abtastgüte G | Raster (R) | | | | | | | | | $\Sigma(S(R))$ | $\Sigma(S(R)^2)$ |
|---|---|---|---|---|---|---|---|---|---|---|---|
| gut | 0 | 0 | 0 | 4 | 6 | 4 | 0 | 0 | 0 | 14 | 68 |
| sehr gut | 0 | 0 | 0 | 0 | 14 | 0 | 0 | 0 | 0 | 14 | 196 |

Dargestellt ist in der ersten Spalte die Verbesserung der Abtastgüte G. Die zweite Spalte stellt die Anzahl der Symbole pro Raster in einer vorgegebenen Rasterentfernung um den Sollradius herum dar. Die dritte Spalte zeigt, dass jeweils ein Gesamtsummenwert von vorliegend 14 ermittelt wird, wenn das gesamte Radiusumfeld um den Sollradius herum betrachtet wird. Zweckmäßig ist bei einer Betrachtung der einfachen Summe daher nur die Betrachtung eines vorzugsweise engen Bereiches oder eines gewichteten Bereiches um den Sollradius R herum. Wird hingegen das Quadrat der Summenradien betrachtet, so ergibt sich auch bei einer Betrachtung des gesamten Rasterbereichs aus dem resultierenden Wert eine erkennbare Verbesserung der Abtastgüte G. Vorteilhafterweise ist diese Vorgehensweise prinzipiell unabhängig von der tatsächlichen Lage der Sollradien, wobei die Verstärkung berücksichtigt wird.

Durch eine leichte Variation der Phase $\varphi$ von Schritt zu Schritt kann eine iterative Verbesserung durch weitere Erhöhung oder Erniedrigung des Phasenwertes vorgenommen werden.

Auf diese Art und Weise kann eine optimale Phase $\varphi$ bestimmt und fortwährend überwacht werden.

Ändert sich bei dieser Vorgehensweise die optimale Phase, stimmt folglich die Abtastfrequenz noch nicht. Aus der Phasendifferenz $\Delta\varphi$ kann direkt auf die entsprechende Frequenz f geschlossen werden, welche anzupassen ist.

Nach dem Einrasten der Trägerregelung kann der Schalter Sch umgelegt werden, so dass eine normale entscheidungsrückgekoppelte Abtastregelung zum Einsatz kommt. Sobald die parallel weiterlaufende Abtastüberwachung eine Verschlechterung des Gütewerts feststellt, wird der Schalter Sch wieder in die andere Stellung geschaltet, um eine Nachführung und Korrektur des Abtasttaktes vorzunehmen.

Betrachtet werden können alternativ beispielsweise auch Differenzen ermittelter Symbole zu dem nächsten Sollradius. Eine gute Phase der Abtastung ist dann bei einer kleinen oder nicht vorhandenen Differenz gegeben. Insbesondere dieses Verfahren eignet sich auch im Zusammenhang mit einer Tiefpassfilterung für eine fortlaufende Messung. Die Stückelung in einzelne Versuche entfällt dann.

Das Verfahren beruht somit darauf, dass bei richtiger Abtastung alle Radien der vorläufigen Symbole auf Sollradien fallen, während in den Zeiten zwischen den Symbolen der Phasenvektor auf dem Weg von einem Symbol zum nächsten ist und, da meistens ein anderes Symbol angesteuert wird und da das Signal insgesamt tiefpassgefiltert ist, die Übergänge somit weich sind, so dass der Phasenvektor wahrscheinlich nicht auf einem Sollradius zu finden sein wird. Dieses Verfahren ist vorteilhafterweise komplett unabhängig vom Zustand der Trägerregelung, da die Winkelinformation des vorläufigen Symbols ignoriert wird. Das Verfahren kann dabei mit Versuchen von je n-Symbolen arbeiten. Die n-Symbole können für verschiedene Versuche identisch sein oder jeweils neu bestimmt werden. Bei dieser Verfahrensweise wird keine Regelspannung geliefert, welche der ersten Ableitung der Güte nach der Phase entsprechen würde. Die Steuerung schreitet somit probierend voran. Das Probieren kann ersetzt werden durch eine angedeutete Modulation des Abtastwinkels, was bei nicht optimaler Abtastung zu einer Modulation mit gleicher Frequenz der Gütegröße führt. Weiterhin ist es möglich, die Abtastschaltung und nachfolgende Blöcke doppelt auszuführen, um eine Früh/Spät-Messung zu erlauben. Möglich ist auch der Einsatz einer eigenständigen Anordnung für den eigentlichen Signalpart als zusätzlicher Anordnung von entsprechenden Schaltungselementen.

**Patentansprüche**

1.   Verfahren zum Bestimmen eines Abtastzeitpunkts eines Taktsignals (t; T) für eine Schaltungsanordnung (1; 1') zum Bestimmen von Symbole (Se) mit diskreten Amplituden aus einem digitalisierten Signal (sd, S) eines Modulationsverfahrens mit den Schritten:

   a) Umsetzen des digitalisierten und demodulierten Signals (S) in eine radiale Komponente (R, S1, S2),
   b) Bestimmen eines Gütewertes (G) von Signalen (S) anhand einer radiusbezogenen Lage der Signale bei einer ersten Abtastphase ($\varphi_i$), welche relativ zu einem Basistaktzeitpunkt eines Basistaktes festgelegt ist (S2, S3), **gekennzeichnet durch** die Schritte:
   c) Bestimmen eines weiteren Gütewertes (G*) von Symbolen (S) bei einer relativ zu der vorherigen Abtastphase ($\varphi_i$) variierten Abtastphase ($\varphi_{i2} = \varphi_i + \Delta\varphi$) (S4, S5),
   d) Ermitteln des besseren der bestimmten Gütewerte (G, G*) (S6) und
   e) weiteres Verwenden der Abtastphase ($\varphi_i$ oder ($\varphi_{i2}$) des besseren Gütewerts (G bzw. G*) und

f) weiteres Variieren der Abtastphase ($\varphi_1$, $\varphi_{i,2}$) (S6, S7, S8), wobei die Gütewerte (G, G*) der Signale (S) abhängig von der Häufigkeitsverteilung der Signale (S) in der radialen Komponente (R) bestimmt werden.

2. Verfahren nach Anspruch 1, bei dem das Modulationsverfahren ein PSK- oder QAM-Verfahren oder ein demgegenüber höherwertiges Modulationsverfahren ist (PSK: Phase-Shift Keying, QAM: Quadratur Amplitude Modulation).

3. Verfahren nach Anspruch 1 oder 2, bei dem aus Gütewerten (G, G*), welche in zeitlichen Abständen bestimmten Signalen (S) zugeordnet sind, und den dabei verwendeten Abtastphasen ($\varphi_i$ bzw. $\varphi_{i2}$) eine Frequenzkorrektur bestimmt wird.

4. Verfahren nach Anspruch 1 oder 2, bei dem das Bestimmen Gütewerte (G, G*) der Signale (S) zu aufeinanderfolgenden Zeitpunkten mit gleichen Abtastphasen ($\varphi_i = \varphi_{i2}$) durchgeführt wird und anhand einer Wertveränderung der Gütewerte (G, G*) eine erforderliche Frequenzkorrektur angezeigt wird.

5. Verfahren nach Anspruch 1, bei dem die Gütewerte (G, G*) abhängig vom Quadrat der Häufigkeiten der Signale (S) und abhängig von der radialen Verteilung der Signale bestimmt werden.

6. Verfahren nach einem vorstehenden Anspruch, bei dem die Gütewerte (G, G*) der Signale (S) im Bereich festgelegter Radien ($R_a$ - $R_i$) des Modulationsverfahrens in der polaren Signalkoordinatenebene (R, $\alpha$) bestimmt werden.

7. Verfahren nach einem vorstehenden Anspruch, bei dem die Gütewerte (G, G*) der Signale (S) im Bereich eines oder mehrerer ausgewählter Radien ($R_a$ - $R_c$) aus einer Vielzahl von Radien des Modulationsverfahrens bestimmt werden.

8. Verfahren nach Anspruch 6 oder 7, bei dem die Gütewerte (G, G*) der Signale (S) nur in festgelegten Toleranzbereichen ($\Delta R$) um die Radien ($R_b$) herum bestimmt werden.

9. Verfahren nach einem der Ansprüche 1 bis 8, bei dem die Gütewerte (G, G*) der Signale (S) in Bereichen um die Radien ($R_a$ - $R_i$) herum gewichtet bestimmt werden.

10. Verfahren nach einem vorstehenden Anspruch, bei dem der Basistakt nach einer festgestellten erforderlichen Verschiebung des Abtastzeitpunktes gegenüber dem ursprünglichen Basistakt um eine entsprechende Differenztaktdauer verschoben wird.

11. Verfahren nach einem vorstehenden Anspruch, bei dem bei einer kontinuierlichen Veränderung der über eine Vielzahl an Abtastzeitpunkten bestimmten Gütewerte (G, G*) die Taktdauer (T) des Basistaktes korrigiert wird.

12. Schaltungsanordnung zum Bestimmen eines Abtastzeitpunktes eines Taktsignals (t; T) für eine Schaltungsanordnung (1; 1') zum Bestimmen von Symbolen (Se) mit diskreten Amplituden aus einem digitalisierten Signal (sd, S) eines Modulationsverfahrens mit einer Taktsteuereinrichtung (17 - 29) zum Ausgeben von Taktsignalen ($t_i$) zu diskreten Abtastzeitpunkten,

- einen Polarkoordinatenumsetzer (20), dem das Signal (S) zuführbar, und an dem ausgangsseitig wenigstens eine Radiuskomponente (R) des Signals abgreifbar ist
- einen ersten Speicher (22), dem zumindest die Radiuskomponente (R) zuführbar ist, und an dem ausgangsseitig eine Häufigkeitsverteilung der Radiuskomponenten (R) abgreifbar ist
**gekennzeichnet durch**
- eine Schaltung zur Gütewertermittlung (28) zu Signalen (S) mit verschieden variieren Abtastphasen ($\varphi_i$, $\varphi_{i2}$) abhängig von der Häufigkeitsverteilung, der die Häufigkeitsverteilung zuführbar, und an der ausgangsseitig Gütewerte (G, G*) abgreifbar sind und
- eine Steuereinrichtung (24) zum variieren der Abtastphase ($\varphi_i$, $\varphi_{i2}$) gegenüber einem Basisabtastzeitpunkt eines Basisabtasttaktes, der die Gütewerte (G, G*) zuführbar sind, und an der ausgangsseitig die Abtastphase ($\varphi_i$, $\varphi_{i2}$) des besseren Gütewerts (G, G*) abgreifbar ist.

13. Schaltungsanordnung nach Anspruch 12 mit einer Schalteinrichtung (27, Sch) zum Bestimmen des Taktsignals ($t_i$) wahlweise entsprechend einer entscheidungsrückgekoppelten Abtastregelung oder mit einem Wert einer variierten Abtastphase ($\varphi_i$, $\varphi_{i2}$), wobei die entscheidungsrückgekoppelte Abtastregelung nur bei eingerasteter Trägerfrequenz- und Trägerphasenregelung gewählt wird.

**Claims**

1. A method of determining a sampling time of a clock signal (t; T) for a circuit arrangement (1; 1') for the determination of symbols (Se) having discrete amplitudes from a digitized signal (sd, S) of a modulation method, comprising the steps of:

 a) converting the digitized and demodulated signal (S) into a radial component (R, S1, S2),
 b) determining a quality value (G) of signals (S) on the basis of a radius-related position of the signals in a first sampling phase ($\varphi_i$) which is defined relative to a base clock time of a base clock (S2, S3),
 **characterized by** the steps of:
 c) determining a further quality value (G*) of symbols (S) in a sampling phase ($\varphi_{i2} = \varphi_i + \Delta\varphi$) which is varied relative to the preceding sampling phase ($\varphi_1$) (S4, S5),
 d) determining the better one of the determined quality values (G, G*) (S6),
 e) further using the sampling phase ($\varphi_i$ or $\varphi_{i2}$) of the better quality value (G or G*) and
 f) further varying the sampling phase ($\varphi_i$, $\varphi_{i2}$) (S6, S7, S8), the quality values (G, G*) of the signals (S) being determined on the basis of the frequency distribution of the signals (S) in the radial component (R).

2. The method according to claim 1, wherein the modulation method is a PSK or QAM method or a modulation method of higher grade in comparison therewith (PSK: Phase-Shift Keying, QAM: Quadrature Amplitude Modulation).

3. The method according to claim 1 or 2, wherein a frequency correction is determined from quality values (G, G*) which are assigned to signals (S) determined in intervals, and from the sampling phases used therein.

4. The method according to claim 1 or 2, wherein the determination of the quality values (G, G*) of the signals (S) is carried out at consecutive times with equal sampling phases ($\varphi_i = \varphi_{i2}$), and any required frequency correction is indicated on the basis of a change in value of the quality values (G, G*).

5. The method according to claim 1, wherein the quality values (G, G*) are determined depending on the squared value of the frequencies of the signals (S) and depending on the radial distribution of the signals.

6. The method according to any of the preceding claims, wherein the quality values (G, G*) of the signals (S) are determined in the range of defined radii ($R_a$ - $R_i$) of the modulation method in the polar signal coordinate plane (R, $\alpha$).

7. The method according to any of the preceding claims, wherein the quality values (G, G*) of the signals (S) are determined in the range of one or more selected radii ($R_a$ - $R_c$) from a plurality of radii of the modulation method.

8. The method according to claim 6 or 7, wherein the quality values (G, G*) of the signals (S) are only determined in defined tolerance ranges ($\Delta R$) around the radii ($R_b$).

9. The method according to any one of claims 1 to 8, wherein the quality values (G, G*) of the signals (S) are determined in ranges around the radii ($R_a$ - $R_i$) in a weighted manner.

10. The method according to any of the preceding claims, wherein the base clock is shifted by a corresponding differential clock period with respect to the original base clock when it has been detected that a shifting process is required.

11. The method according to any of the preceding claims, wherein the clock period (T) of the base clock is corrected with a continuous change in the quality values (G, G*) which are determined by means of a plurality of sampling times.

12. A circuit arrangement for determining a sampling time of a clock signal (t; T) for a circuit arrangement (1; 1') for the determination of symbols (Se) having discrete amplitudes from a digitized signal (sd, S) of a modulation method, comprising a clock control means (17 - 29) for delivering clock signals ($t_i$) at discrete sampling times,

 - a polar coordinate converter (20) which can be supplied with the signal (S) and comprises an output side at which at least one radius component (R) the signals can be tapped,
 - a first memory (22) which can be supplied with at least the radius component (R) and comprises an output side at which a frequency distribution of the radius components (R) can be tapped,

**characterized by**

- a circuitry (28) for the determination of quality values in relation to signals (S) with differently varied sampling phases ($\varphi_i$, $\varphi_{i2}$) depending on the frequency distribution, which can be supplied with the frequency distribution and comprises an output side at which quality values (G, G*) can be tapped, and
- a control means (24) for varying the sampling phase ($\varphi_i$, $\varphi_{i2}$) with respect to a base sampling time of a base clock, which can be supplied with the quality values (G, G*) and comprises an output side at which the sampling phase ($\varphi_i$, $\varphi_{i2}$) of the better one of the quality values (G, G*) can be tapped.

**13.** The circuit arrangement according to claim 12, comprising a switching means (27, Sch) for determining the clock signal ($t_i$) optionally corresponding to a decision feedback sampling control or comprising a value of a varied sampling phase ($\varphi_i$, $\varphi_{i2}$), the decision feedback sampling control being selected only with locked carrier frequency control and carrier phase control.

**Revendications**

**1.** Procédé de détermination d'un instant d'échantillonnage d'un signal d'horloge (t ; T) pour un montage de circuits (1 ; 1') en vue de la détermination de symboles (Se) avec des amplitudes discrètes à partir d'un signal numérisé (sd, S) d'un procédé de modulation, comportant les étapes suivantes :

a) conversion du signal numérisé et démodulé (S) dans une composante radiale (R, S1, S2),
b) détermination d'une valeur qualitative (G) de signaux (S) à l'aide d'une position des signaux relative au rayon dans une première phase d'échantillonnage ($\varphi_1$) qui est définie relativement à un instant de cadence de base d'une cadence de base (S2, S3),
**caractérisé par** les étapes suivantes :
c) détermination d'une autre valeur qualitative (G*) de symboles (S) dans une phase d'échantillonnage ($\varphi_{i2} = \varphi_i + \Delta\varphi$) variée relativement à la phase d'échantillonnage précédente ($\varphi_i$) (S4, S5),
d) détermination de la meilleure des valeurs qualitatives déterminées (G, G*) (S6) et
e) utilisation supplémentaire de la phase d'échantillonnage ($\varphi_1$ ou ($\varphi_{i2}$) de la meilleure valeur qualitative (G ou G*) et
f) variation supplémentaire de la phase d'échantillonnage ($\varphi_1$, $\varphi_{i2}$) (S6, S7, S8), les valeurs qualitatives (G, G*) des signaux (S) étant déterminés en fonction de la répartition de fréquence des signaux (S) dans la composante radiale (R).

**2.** Procédé selon la revendication 1, où le procédé de modulation est un procédé PSK ou QAM ou un procédé de modulation supérieur par rapport à ces derniers (PSK : Phase-Shift Keying, QAM : Quadratur Amplitude Modulation).

**3.** Procédé selon la revendication 1 ou 2, où une correction de fréquence est déterminée à partir de valeurs qualitatives (G, G*) qui sont associées à des signaux (S) déterminés à intervalles de temps, et à partir des phases d'échantillonnage utilisées pour ce faire ($\varphi_1$ ou $\varphi_{i2}$).

**4.** Procédé selon la revendication 1 ou 2, où la détermination de valeurs qualitatives (G, G*) des signaux (S) est effectuée à des instants consécutifs avec des phases d'échantillonnage égales ($\varphi_1 = \varphi_{i2}$) et où une correction de fréquence nécessaire est indiquée à l'aide d'une modification de valeur des valeurs qualitatives (G, G*).

**5.** Procédé selon la revendication 1, où les valeurs qualitatives (G, G*) sont déterminées en fonction du carré des fréquences des signaux (S) et en fonction de la répartition radiale des signaux.

**6.** Procédé selon l'une des revendications précédentes, où les valeurs qualitatives (G, G*) des signaux (S) sont déterminées dans la plage de rayons définis ($R_a$ - $R_i$) du procédé de modulation dans le plan de coordonnées polaires des signaux (R, $\alpha$).

**7.** Procédé selon l'une des revendications précédentes, où les valeurs qualitatives (G, G*) des signaux (S) sont déterminées dans la plage d'un ou de plusieurs rayons sélectionnés ($R_a$ - $R_c$) à partir d'une multitude de rayons du procédé de modulation.

**8.** Procédé selon la revendication 6 ou 7, où les valeurs qualitatives (G, G*) des signaux (S) ne sont déterminées que dans des plages de tolérance définies ($\Delta R$) autour des rayons ($R_b$).

9. Procédé selon l'une des revendications 1 à 8, où les valeurs qualitatives (G, G*) des signaux (S) sont déterminées de manière pondérée dans des plages autour des rayons ($R_a$ - $R_i$).

10. Procédé selon l'une des revendications précédentes, où la cadence de base, après un décalage nécessaire constaté de l'instant d'échantillonnage, est décalée d'une durée de cadence différentielle équivalente par rapport à la cadence de base initiale.

11. Procédé selon l'une des revendications précédentes, où la durée de cadence (T) de la cadence de base est corrigée en cas de modification continue des valeurs qualitatives (G, G*) déterminées sur une multitude d'instants d'échantillonnage.

12. Montage de circuits destiné à déterminer un instant d'échantillonnage d'un signal d'horloge (t ; T) pour un montage de circuits (1 ; 1') en vue de la détermination de symboles (Se) avec des amplitudes discrètes à partir d'un signal numérisé (sd, S) d'un procédé de modulation avec un dispositif de commande de cadence (17 - 29) en vue de sortir des signaux d'horloge ($t_i$) à des instants d'échantillonnage discrets,

    - un convertisseur de coordonnées polaires (20), auquel le signal (S) peut être transmis, et en sortie duquel au moins une composante de rayon (R) du signal peut être prélevée,
    - une première mémoire (22), à laquelle au moins la composante de rayon (R) peut être transmise, et en sortie de laquelle une répartition de fréquence des composantes de rayon (R) peut être prélevée,

**caractérisé par**

    - un circuit destiné à déterminer des valeurs qualitatives (28) concernant des signaux (S) présentant des phases d'échantillonnage variées de manière diverse ($\varphi_1$, $\varphi_{i2}$) en fonction de la répartition de fréquence, auquel la répartition de fréquence peut être transmise, et en sortie duquel des valeurs qualitatives (G, G*) peuvent être prélevées et
    - un dispositif de commande (24) pour varier la phase d'échantillonnage ($\varphi_1$, $\varphi_{i2}$) par rapport à un instant d'échantillonnage de base d'une cadence d'échantillonnage de base, auquel les valeurs qualitatives (G, G*) peuvent être transmises, et en sortie duquel la phase d'échantillonnage ($\varphi_1$, $\varphi_{i2}$) de la meilleure valeur qualitative (G, G*) peut être prélevée.

13. Montage de circuits selon la revendication 12, comportant un dispositif de commutation (27, Sch) en vue de la détermination du signal d'horloge ($t_i$) selon une régulation d'échantillonnage à rétroaction de décision ou avec une valeur d'une phase d'échantillonnage variée ($\varphi_1$, $\varphi_{i2}$), au choix, la régulation d'échantillonnage à rétroaction de décision n'étant choisie que si la régulation de fréquence de porteuse et de phase de porteuse est enclenchée.

FIG 1

FIG 2A

FIG 2B

FIG 2C

## FIG 2D

16 QAM

# FIG 3 A

# FIG 3B

FIG 4

FIG 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4866739 A

### In der Beschreibung aufgeführte Nicht-Patentliteratur

- **K.D. Kammeyer.** Nachrichtenübertragung. Verlag B.G. Teubner, 1996
- *Adaptiver Entzerrer mit quantisierter Rückführung,* 200-202
- *Entscheidungsrückgekoppelte Taktregelung,* 213-215
- *Entscheidungsrückgekoppelte Trägerphasenregelung im Basisband,* 429-431